# EUROPÄISCHE PATENTSCHRIFT

(11) **EP 2 614 338 B1**
(45) Veröffentlichungstag und Bekanntmachung des Hinweises auf die Patenterteilung: **29.09.2021**
(21) Anmeldenummer: 11743514.9
(22) Anmeldetag: 09.08.2011
(51) Int. Cl.: G01F 1/84

(54) **VERFAHREN ZUM DETEKTIEREN EINER VERSTOPFUNG IN EINEM DURCHFLUSSMESSGERÄT**
METHOD FOR DETECTING A BLOCKAGE IN A FLOWMETER
PROCÉDÉ POUR DÉTECTER UNE OBSTRUCTION DANS UN DÉBITMÈTRE

(30) Priorität: 10.09.2010 DE 102010040598
(43) Veröffentlichungstag der Anmeldung: 17.07.2013
(73) Patentinhaber: Endress + Hauser Flowtec AG, 4153 Reinach (CH)
(72) Erfinder: ZHU, Hao, 85354 Freising (DE); DRAHM, Wolfgang, 85435 Erding (DE); RIEDER, Alfred, 84032 Landshut (DE)
(74) Vertreter: Andres, Angelika Maria
(86) Internationale Anmeldenummer: PCT/EP2011/063654
(87) Internationale Veröffentlichungsnummer: WO 2012/031843

(56) Entgegenhaltungen:
- WO-A1-2010/085972
- US-A- 5 918 268
- None

## Beschreibung

Die Erfindung betrifft ein Verfahren zum Detektieren einer vollständigen oder teilweisen Verstopfung eines Messrohres eines Messwandlers vom Vibrationstyp eines Durchflussmessgerätes sowie ein entsprechend ausgebildetes Durchflussmessgerät, wobei der Messwandler von Medium durchströmt wird und mindestens zwei strömungstechnisch parallel geschaltete Messrohre aufweist, die im Einsatz zu mechanischen Schwingungen anregbar sind.

Solche Messwandler werden insbesondere in Coriolis-Durchflussmessgeräten eingesetzt. Nach dem Coriolis-Prinzip wirkt immer dann, wenn sich in einem System eine rotierende und eine, zumindest teilweise senkrecht zu der Rotationsachse verlaufende, geradlinige Massebewegung überlagern, auf die bewegte Masse eine zusätzliche Kraft, die als Coriolis-Kraft bezeichnet wird. Dieser Effekt wird in bekannter Weise in Coriolis-Durchflussmessgeräten ausgenutzt, beispielsweise um einen Massedurchfluss eines, in einer Rohrleitung strömenden Mediums zu bestimmen. Im Einsatz werden solche Coriolis-Durchflussmessgeräte in eine, von dem jeweiligen Medium durchströmte Rohrleitung als so genannte Inline-Messgeräte eingesetzt.

Häufig werden Messwandler in Coriolis-Durchflussmessgeräten eingesetzt, die zwei, strömungstechnisch parallel geschaltete Messrohre aufweisen, auf die ein in der Rohrleitung strömendes Medium aufgeteilt wird. In der Regel werden die beiden Messrohre im Einsatz gegenphasig zueinander angeregt. Auf diese Weise gelingt eine Entkopplung des Schwingungssystems, das die zwei Messrohre aufweist, von externen Vibrationseinflüssen. Ferner kann ein Messwandler eines Coriolis-Durchflussmessgerätes auch mehr als zwei Messrohre, wie beispielsweise vier Messrohre, die strömungstechnisch parallel zueinander geschaltet sind, aufweisen. In industriellen Anwendungen kann dabei der Fall auftreten, dass bei solchen Coriolis-Durchflussmessgeräten (mindestens) eines der Messrohre vollständig oder teilweise verstopft ist. Dieser Fall tritt insbesondere dann auf, wenn ein hochviskoses, inhomogenes und/oder zur Ansatzbildung neigendes Medium in der betreffenden Rohrleitung strömt.

Solch eine Verstopfung ist schwierig zu detektieren, da durch das mindestens eine, verbleibende, freie Messrohr weiterhin ein Durchfluss ermöglicht wird. Selbst bei vollständiger Verstopfung eines Messrohres ist weiterhin die Durchführung einer Coriolis-Massedurchflussmessung mit dem Coriolis-Durchflussmessgerät möglich. Eine Verstopfung eines Messrohres ist insbesondere nicht ohne weiteres anhand des bestimmten Massedurchflusswertes erkennbar. Es ist jedoch wünschenswert, eine Verstopfung eines Messrohres in Coriolis-Durchflussmessgeräten möglichst verlässlich und frühzeitig zu detektieren. Dieser Bedarf besteht insbesondere bei hygienisch kritischen Anwendungen und/oder bei Anwendungen, bei denen das in der betreffenden Rohrleitung geführte Medium wechselt und eine gegenseitige Kontamination vermieden werden sollte.

In der Druckschrift WO 2009/134268 A1 ist ein Durchflussmessgerät beschrieben, durch das eine Abweichung in einem Durchflussmessgerät-Parameter detektierbar ist. Solch eine Abweichung eines Durchflussmessgerät-Parameters kann unter anderem durch eine Verstopfung eines Messrohres ausgelöst werden. Bei einem beschriebenen Verfahren wird an einem ersten sowie an einem zweiten Messrohr des Durchflussmessgerätes die Temperatur erfasst und daraus ein Temperaturgradient ermittelt. Eine Abweichung in einem Durchflussmessgerät-Parameterwird dann detektiert, wenn der ermittelte Temperaturgradient einen Grenzwert übersteigt.

Das Patentdokument US 5 918 268 A offenbart ein Verfahren zum Detektieren einer vollständigen oder teilweisen Verstopfung eines Rohres bei welchem mit einem Heizelement Wärme an ein in dem Rohr geführtes Medium zugeführt wird und eine Temperatur mit einem thermisch an das in dem ersten Rohr geführte Medium angekoppelten Temperatursensor erfasst wird. Basierend auf der Wärmezuführung und der Temperaturerfassung wird eine Vergleichsgröße bestimmt, die mit einer Referenzgröße verglichen wird. Falls die Vergleichsgröße um mehr als einen Grenzwert von der Referenzgröße abweicht, wird eine Verstopfung des Rohres detektiert.

Aus der WO 2010/085972 A1 ist ein Coriolis-Durchflussmessgerät mit zwei Messrohren bekannt, das Beschleunigungssensoren als Schwingungsaufnehmer verwendet und durch einen Vergleich der Schwingungssignale der beiden Beschleunigungssensoren eines Sensorpaars einen asymmetrischen Durchfluss durch die Messrohre oder eine Verstopfung in einem der Messrohre erkennt.

Dementsprechend besteht die Aufgabe der vorliegenden Erfindung darin, ein Verfahren und ein Durchflussmessgerät bereitzustellen, durch das eine vollständige oder teilweise Verstopfung eines Messrohres eines mehrere Messrohre aufweisenden Messwandlers möglichst verlässlich und frühzeitig detektierbar ist.

Die Aufgabe wird durch ein Verfahren zum Detektieren einer vollständigen oder teilweisen Verstopfung eines Messrohres eines Messwandlers vom Vibrationstyp eines Durchflussmessgerätes gemäß Anspruch 1 gelöst. Vorteilhafte Weiterbildungen der Erfindung sind in den Unteransprüchen angegeben.

Gemäß der vorliegenden Erfindung wird ein Verfahren zum Detektieren einer vollständigen oder teilweisen Verstopfung eines Messrohres eines Messwandlers vom Vibrationstyp eines Durchflussmessgerätes, insbesondere eines Coriolis-Durchflussmessgerätes, bereitgestellt. Der Messwandler wird dabei von Medium durchströmt und weist mindestens zwei strömungstechnisch parallel geschaltete Messrohre auf. Die Messrohre sind im Einsatz zu mechanischen Schwingungen anregbar. Das Verfahren weist nachfolgende Schritte auf:
A) Zuführen von Wärme an in einem ersten Messrohr geführtes Medium mittels mindestens einem Heizelement oder
   Abführen von Wärme von in einem ersten Messrohr geführten Medium mittels mindestens einem Kühlelement,
B) Erfassen einer Temperatur mittels mindestens eines Temperatursensors, der thermisch an das in dem ersten Messrohr geführte Medium angekoppelt ist;
C) Bestimmen einer ersten Vergleichsgröße, die charakteristisch für einen Wärmetransport durch das Medium in dem ersten Messrohr ist, basierend auf der Wärmezuführung beziehungsweise Wärmeabführung sowie der Temperaturerfassung und Vergleichen derselben mit einer Referenzgröße;
D) Detektieren einer Verstopfung mindestens eines Messrohres des Messwandlers, falls die erste Vergleichsgröße um mehr als einen Grenzwert von der Referenzgröße abweicht.

Durch das erfindungsgemäße Verfahren wird ein Maß für den Wärmetransport durch das in dem ersten Messrohr strömende Medium bestimmt. Der Wärmetransport hängt dabei von dem Durchfluss, insbesondere von dem Massedurchfluss, des Mediums innerhalb des ersten Messrohres ab. Ist der Durchfluss in dem ersten Messrohr aufgrund einer teilweisen Verstopfung des ersten Messrohres reduziert oder aufgrund einer vollständigen Verstopfung des ersten Messrohres vollständig unterdrückt, so ist auch der Wärmetransport durch das in dem ersten Messrohr geführte Medium entsprechend reduziert. Ist hingegen der Durchfluss in dem ersten Messrohr aufgrund einer teilweisen oder vollständigen Verstopfung mindestens eines anderen Messrohres erhöht, so ist auch der Wärmetransport durch das in dem ersten Messrohr strömende Medium erhöht. Indem gemäß dem erfindungsgemäßen Verfahren eine erste Vergleichsgröße bestimmt wird, die charakteristisch für einen Wärmetransport durch das in dem ersten Messrohr geführte Medium ist, und diese mit einer Referenzgröße verglichen wird, kann auf einfache Weise festgestellt werden, ob der Wärmetransport durch das in dem ersten Messrohr geführte Medium erhöht oder reduziert ist gegenüber einem zu erwartenden Wert (d.h. der Referenzgröße). Dementsprechend kann bei Auftreten einer signifikanten Abweichung (zwischen erster Vergleichsgröße und Referenzgröße) eine Verstopfung mindestens eines Messrohres zuverlässig festgestellt werden. Der Grenzwert (für die Abweichung zwischen der ersten Vergleichsgröße und der Referenzgröße) kann dabei je nach gewünschter Empfindlichkeit und je nach Anwendung entsprechend gewählt werden.

Indem bei dem erfindungsgemäßen Verfahren durch ein Heizelement bzw. Kühlelement gezielt Wärme an das in dem ersten Messrohr geführte Medium zugeführt bzw. abgeführt wird, ist das erfindungsgemäße Verfahren zuverlässig und unabhängig von den jeweils vorliegenden, thermischen Randbedingungen durchführbar. Denn je nach Einsatz eines Durchflussmessgerätes kann das durch das Durchflussmessgerät strömende Medium eine andere oder auch die gleiche Temperatur wie die Umgebung, wie die Messrohre des Durchflussmessgerätes, etc. aufweisen. Ferner können die jeweiligen Temperaturen über die Zeit auch schwanken.

In dem Zusammenhang mit der vorliegenden Erfindung wird teilweise erwähnt, dass "mindestens ein" Bauteil vorgesehen ist. Bei diesen Bauteilen wird auch bei den weiteren Ausführungen auf die Möglichkeit der Vorsehung von mehr als einem Bauteil Bezug genommen, auch wenn dies nicht jedesmal explizit erwähnt wird.

Das erfindungsgemäße Verfahren betrifft ein Durchflussmessgerät mit einem Messwandler vom Vibrationstyp. Ein Messwandler vom Vibrationstyp dient dabei allgemein dazu, in einem hindurchströmenden Medium mechanische Reaktionskräfte, z.B. massedurchflussabhängige Coriolis-Kräfte, dichteabhängige Trägheitskräfte und/oder viskositätsabhängige Reibungskräfte, zu erzeugen. Diese mechanischen Reaktionskräfte wiederum sind sensorisch erfassbar. Eine typische Betriebsweise solch eines Durchflussmessgerätes wird nachfolgend beschrieben: Es werden sämtliche (hier: mindestens zwei) Messrohre zu mechanischen Schwingungen durch mindestens einen Erreger angeregt. Hierbei kann insbesondere der Grundmodus der Biegeschwingungen angeregt werden. Ferner werden die mechanischen Schwingungen der Messrohre durch mindestens einen (in der Regel mindestens zwei, entlang der Erstreckungsrichtung der Messrohre beabstandete) Schwingungs-Sensor(en) erfasst. Die von dem mindestens einen Schwingungs-Sensor bereitgestellten Sensorsignale werden durch eine Elektronik des Durchflussmessgerätes ausgewertet. Die Ansteuerung des Erregers erfolgt in der Regel ebenfalls durch die Elektronik.

Das Durchflussmessgerät ist insbesondere als Coriolis-Durchflussmessgerät ausgebildet. Durch ein Coriolis-Durchflussmessgerät ist der Massedurchfluss des Mediums durch das Coriolis-Durchflussmessgerät unter Ausnutzung des Coriolis-Prinzips bestimmbar. Werden die Messrohre nicht von Medium durchströmt, so schwingen sie bei Anregung zu mechanischen Schwingungen (entlang ihrer jeweiligen Erstreckungsrichtung) in Phase. Werden die Messrohre von einem Medium durchströmt (mit einer Strömungsgeschwindigkeit größer als Null), so führt dies dazu, dass die Messrohre aufgrund der auf das strömende Medium wirkenden Coriolis-Kraft zusätzlich verformt werden. Diese, entlang der Messrohre auftretende Phasenverschiebung kann durch den mindestens einen Schwingungs-Sensor erfasst werden. Beispielsweise können mindestens zwei, entlang der Erstreckungsrichtung der Messrohre voneinander beabstandet angeordnete Schwingungs-Sensoren vorgesehen sein. Die Phasenverschiebung ist proportional zu dem Massedurchfluss.

Zusätzlich oder alternativ kann/können durch ein Durchflussmessgerät mit einem Messwandler vom Vibrationstyp auch eine Dichte und/oder eine Viskosität des strömenden Mediums bestimmt werden. Zur Bestimmung der Dichte des Mediums wird das Prinzip ausgenutzt, dass die Resonanzfrequenz (beispielsweise des Grundmodus der Biegeschwingung) von der schwingenden Masse und damit von der Dichte des strömenden Mediums abhängt. Unabhängig davon, welche physikalische Messgröße (Massedurchfluss, Dichte, Viskosität, etc.) durch ein Durchflussgerät gerade tatsächlich bestimmt wird oder allgemein bestimmbar ist, werden solche Durchflussmessgeräte mit einem Messwandler vom Vibrationstyp häufig allgemein als Coriolis-Durchflussmessgeräte bezeichnet.

Unter einer "vollständigen Verstopfung" eines Messrohres wird ein Zustand verstanden, in dem kein Durchfluss mehr durch das betreffende Messrohr ermöglicht wird. Unter einer "teilweisen Verstopfung" eines Messrohres wird ein Zustand verstanden, in dem der Durchfluss durch das betreffende Messrohr reduziert ist. Eine teilweise Verstopfung kann beispielsweise durch eine Schichtbildung oder durch Ablagerungen des Mediums innerhalb des betreffenden Messrohres gebildet werden. Wird in dem vorliegenden Zusammenhang allgemein auf eine "Verstopfung" Bezug genommen, so wird dabei sowohl auf die Möglichkeit einer vollständigen wie auch einer teilweisen Verstopfung Bezug genommen.

Das "Medium" kann vollständig oder auch nur teilweise durch eine Flüssigkeit, ein Gas oder eine Mischung aus Flüssigkeit und Gas gebildet werden. Die Flüssigkeit, das Gas oder die Mischung aus Flüssigkeit und Gas kann insbesondere auch Feststoffteile (beispielsweise pneumatisch geförderter Staub, Feststoffteile in Gas, Feststoffteile in Flüssigkeit, etc.) mitführen.

Die Zuführung bzw. Abführung von Wärme an bzw. von dem in dem ersten Messrohr geführten Medium kann direkt bzw. unmittelbar an das Medium erfolgen. In diesem Fall ist das Heizelement bzw. Kühlelement insbesondere innerhalb des ersten Messrohres (oder gegebenenfalls auch kurz oberhalb stromaufwärts desselben) in direktem Kontakt mit dem Medium angeordnet. Ferner kann die Zuführung bzw. Abführung von Wärme auch mittelbar, insbesondere über das erste Messrohr, erfolgen. In dem letzteren Fall kann das Heizelement bzw. Kühlelement insbesondere außen an der Messrohrwand des ersten Messrohres angeordnet sein oder sich zumindest teilweise durch die Messrohrwand des ersten Messrohres erstrecken. In entsprechender Weise ist auch bei dem Temperatursensor, der thermisch an das in dem ersten Messrohr geführte Medium angekoppelt ist, nicht zwingend, dass dieser innerhalb des ersten Messrohres angeordnet ist und in direktem Kontakt mit dem Medium steht. Insbesondere kann der Temperatursensor innerhalb des ersten Messrohres oder außen an der Messrohrwand des ersten Messrohres angeordnet sein oder er kann sich vollständig oder teilweise durch die Messrohrwand des ersten Messrohres erstrecken. Vorzugsweise ist der Temperatursensor thermisch stärker an das in dem ersten Messrohr geführte Medium angekoppelt als an das in den/dem verbleibenden Messrohr(en) geführte Medium. Es besteht ferner die Möglichkeit, dass der Temperatursensor in dem Durchflussmessgerät zusätzlich zur Erfassung einer Temperatur des Mediums eingesetzt wird, um basierend auf der erfassten Temperatur eine Temperaturkompensation bei der Bestimmung der physikalischen Messgröße (z.B. Massedurchfluss, Dichte und/oder Viskosität) in dem Durchflussmessgerät durchzuführen. Ferner können an dem ersten Messrohr auch mehrere Temperatursensoren vorgesehen sein, so dass auch eine räumliche Temperaturverteilung erfassbar ist. Der Schritt des Erfassens der Temperatur (Schritt B)) durch den mindestens einen Temperatursensor kann insbesondere zeitgleich oder zeitlich nach hinten versetzt zu dem Schritt des Zuführens oder Abführens von Wärme (Schritt A)) durchgeführt werden.

Allgemein ist bevorzugt, dass das Heizelement bzw. Kühlelement sowie der Temperatursensor in dem Bereich des ersten Messrohres, insbesondere nicht deutlich stromaufwärts oder stromabwärts desselben angeordnet sind. Bei dem Heizelement bzw. Kühlelement kann auch vorgesehen sein, dass dieses stromaufwärts der Abzweigung, durch welche die Strömung auf mehrere Messrohre aufgeteilt wird, angeordnet ist.

Die bestimmte Vergleichsgröße ist eine Größe, die charakteristisch für den Wärmetransport durch das in dem entsprechenden Messrohr geführte Medium ist. Dabei können grundsätzlich, wie auch anhand der unterhalb erläuterten Weiterbildungen deutlich wird, verschiedene Größen als Vergleichsgröße für das erfindungsgemäße Detektionsverfahren verwendet werden. Welche Größe(n) geeignet ist/sind, hängt auch von der genauen Durchführung der Schritte des Zuführens bzw. Abführens von Wärme (vgl. Schritt A)) sowie des Erfassens der Temperatur (vgl. Schritt B)) ab. Die Vergleichsgröße kann durch einen einzelnen Wert oder auch durch einen Werteverlauf (z.B. Kurve eines Temperaturanstiegs oder eines Temperaturabfalls, jeweils aufgetragen über der Zeit) gebildet werden. In entsprechender Weise kann auch die Referenzgröße durch einen einzelnen Wert oder einen Werteverlauf gebildet werden. Der Grenzwert kann insbesondere ein in dem Durchflussmessgerät gespeicherter Grenzwert sein. Dabei kann es sich um einen festen Wert handeln. Alternativ kann der Grenzwert auch in Abhängigkeit von anderen Größen, wie beispielsweise von einer tatsächlichen Durchflussrate des Mediums durch das Durchflussmessgerät, von einer Umgebungstemperatur oder einer Temperatur des Mediums, von thermischen Eigenschaften des Mediums und/oder in Abhängigkeit von der jeweiligen Anwendung, etc., bestimmt werden. Der Grenzwert kann auch durch einen Benutzer, je nach gewünschter Empfindlichkeit, einstellbar sein.

Der Temperatursensor und das Heizelement können dabei durch ein- und dasselbe Element gebildet werden. Wie dem Fachmann bekannt ist, kann beispielsweise ein entsprechend ausgebildetes und angesteuertes Widerstandsheizelement auch als Temperatursensor betreibbar sein. Alternativ können der Temperatursensor und das Heizelement auch als jeweils separate Elemente ausgebildet sein.

Falls bei Schritt D) eine Verstopfung mindestens eines Messrohres des Messwandlers detektiert wird, kann dies beispielsweise an einen Benutzer (z.B. über eine Vorort-Anzeige an dem Durchflussmessgerät) und/oder an eine übergeordnete, über ein Netzwerk verbundene Steuereinheit, die eine Prozesssteuerung und/oder eine Überwachung mehrerer, in Kommunikationsverbindung stehender Feldgeräte ausführt, signalisiert werden.

Ferner besteht die Möglichkeit, dass das erfindungsgemäße Verfahren nicht nur an einem sondern jeweils an mehreren Messrohren des Durchflussmessgerätes durchgeführt wird. Ferner ist das Verfahren unabhängig von der jeweiligen Form und Anzahl (mindestens zwei) der Messrohre, dem jeweils angeregten Schwingungsmodus und der jeweils durch das Durchflussmessgerät erfassten physikalischen Messgröße (Massedurchfluss, Dichte, Viskosität, etc.) durchführbar. Gemäß einer Weiterbildung ist vorgesehen, dass das erfindungsgemäße Verfahren periodisch, insbesondere in vorbestimmten Zeitabständen, durchgeführt wird. Beispielsweise wird das Verfahren automatisch durch die Elektronik nach Ablauf eines vorbestimmten Zeitabstandes gestartet.

Gemäß einer nicht erfindungsgemäßen Weiterbildung ist die Referenzgröße eine im Voraus bestimmte und aus einem Speicher abrufbare Größe. Der Speicher kann insbesondere in dem Durchflussmessgerät selbst vorgesehen sein. Die Referenzgröße kann dabei auch in Abhängigkeit von anderen Größen, wie beispielsweise von einer tatsächlichen Durchflussrate des Mediums durch das Durchflussmessgerät, von einer Umgebungstemperatur oder einer Temperatur des Mediums, von thermischen Eigenschaften des Mediums und/oder von der jeweiligen Anwendung bestimmt werden.

Gemäß einer Weiterbildung weist das Verfahren nachfolgende(n) Schritt(e) auf:
E) Detektieren einer Verstopfung des ersten Messrohres, wenn die bestimmte, erste Vergleichsgröße von der Referenzgröße derart abweicht, dass in dem ersten Messrohr ein reduzierter Wärmetransport durch das Medium erfolgt; und/oder
F) Detektieren einer Verstopfung mindestens eines anderen Messrohres des Durchflussmessgerätes, wenn die bestimmte, erste Vergleichsgröße von der Referenzgröße derart abweicht, dass in dem ersten Messrohr ein erhöhter Wärmetransport durch das Medium erfolgt.

Wie oberhalb erläutert wird, ist die erste Vergleichsgröße charakteristisch bzw. ein Maß für den Wärmetransport durch das Medium in dem ersten Messrohr. Dieser Wärmetransport hängt wiederum von dem Durchfluss durch das erste Messrohr ab. In Abhängigkeit von der Richtung der Abweichung zwischen Vergleichsgröße und Referenzgröße kann folglich bestimmt werden, ob das erste Messrohr oder mindestens ein anderes des/der verbleibenden Messrohre(s) verstopft ist.

Erfindungsgemäß ist die erste Vergleichsgröße eine basierend auf der Wärmezuführung beziehungsweise Wärmeabführung sowie der Temperaturerfassung bestimmte Durchflussrate durch das erste Messrohr und die Referenzgröße ist eine für das erste Messrohr erwartungsgemäße Durchflussrate, die basierend auf einer nach dem Coriolis-Prinzip erfassten Massedurchflussrate durch das gesamte Durchflussmessgerät bestimmt wird. In nicht erfindungsgemäßer Weise können auch andere Größen, die durch Umformen mathematischer Gleichungen erhältlich sind, wie beispielsweise eine Massedurchflussrate, als Vergleichsgröße und Referenzgröße herangezogen werden. Dabei bestehen verschiedene Möglichkeiten, die Durchflussrate basierend auf der Wärmezuführung beziehungsweise Wärmeabführung sowie der Temperaturerfassung durch das erste Messrohr zu bestimmen. Insbesondere können die aus der thermischen Massedurchflussmessung bekannten Verfahren und Messanordnungen angewendet werden. Die Bestimmung der Massedurchflussrate durch das gesamte Durchflussmessgerät erfolgt erfindungsgemäß in bekannter Weise im Rahmen einer Coriolis-Massedurchflussmessung, insbesondere wie es oberhalb beispielhaft erläutert wird.

Gemäß einer nicht erfindungsgemäßen Weiterbildung werden die Schritte des Zuführens bzw. Abführens von Wärme (Schritt A)) sowie des Erfassens der Temperatur (Schritt B)) in entsprechender Weise an mindestens einem zweiten Messrohr des Messwandlers durchgeführt, wobei basierend darauf mindestens eine zweite Vergleichsgröße, die charakteristisch für einen Wärmetransport durch das Medium in dem zweiten Messrohr ist, bestimmt wird, und diese zweite Vergleichsgröße als Referenzgröße für den Vergleich mit der ersten Vergleichsgröße herangezogen wird. Auf diese Weise kann besonders verlässlich ein Unterschied in dem Wärmetransport durch das Medium in den verschiedenen Messrohren und damit eine Verstopfung mindestens eines Messrohres festgestellt werden. Vorzugsweise werden bei dem mindestens einen zweiten Messrohr, das vorzugsweise baugleich und spiegelsymmetrisch zu dem ersten Messrohr ausgebildet ist, die Schritte des Zuführens bzw. Abführens von Wärme (Schritt A)), des Erfassens der Temperatur (Schritt B)) sowie des Bestimmens einer entsprechenden Vergleichsgröße in gleicher Weise bzw. identisch wie bei dem ersten Messrohr durchgeführt. In diesem Fall sind die erste und zweite Vergleichsgröße direkt vergleichbar. Dabei wird das Verfahren an dem zweiten Messrohr vorzugsweise zeitlich parallel durchgeführt. Grundsätzlich kann es aber auch zeitlich versetzt durchgeführt werden. Bezüglich der baulichen Ausführung ist allgemein eine spiegelsymmetrische Ausbildung des Messwandlers, insbesondere eine spiegelsymmetrische Anordnung der (beispielsweise zwei) Messrohre, der Heizelemente bzw. Kühlelemente sowie der Temperatursensoren, bevorzugt. Gemäß einer Weiterbildung ist vorgesehen, dass an einem ersten Messrohr mindestens ein erstes Heizelement bzw. Kühlelement sowie mindestens ein erster Temperatursensor und dass an einem zweiten Messrohr mindestens ein zweites Heizelement bzw. Kühlelement sowie mindestens ein zweiter Temperatursensor in spiegelsymmetrischer Anordnung vorgesehen sind.

Wie bereits oberhalb erläutert wird, können die Schritte des Zuführens bzw. Abführens von Wärme (Schritt A)), des Erfassens der Temperatur (Schritt B)) sowie des Bestimmens einer entsprechenden Vergleichsgröße an sämtlichen, an einem Durchflussmessgerät vorgesehenen Messrohren, beispielsweise an zwei Messrohren, an vier Messrohren, etc., durchgeführt werden. Die dabei erhaltenen Vergleichswerte können dann miteinander verglichen werden. Daraus wiederum kann ermittelt werden, ob und welche(s) Messrohr(e) verstopft ist/sind.

Gemäß einer nicht erfindungsgemäßen Weiterbildung ist vorgesehen, dass sowohl bei dem ersten Messrohr als auch bei mindestens einem zweiten Messrohr basierend auf der Wärmezuführung beziehungsweise Wärmeabführung sowie der Temperaturerfassung jeweils eine Durchflussrate durch das jeweilige Messrohr bestimmt wird und diese Vergleichsgrößen dann miteinander verglichen werden. Wie oberhalb erläutert wird, können dabei insbesondere die aus der thermischen Massedurchflussmessung bekannten Verfahren und Messanordnungen angewendet werden.

Gemäß einer nicht erfindungsgemäßen Weiterbildung wird bei dem Schritt des Zuführens bzw. Abführens von Wärme bei dem ersten Messrohr jeweils die gleiche Wärmemenge zu- bzw. abgeführt wie bei dem zweiten Messrohr. Die erste und die zweite Vergleichsgröße werden dann jeweils durch mindestens eine, nach Abschluss der Wärmezuführung bzw. Wärmeabführung erfasste Temperatur (bzw. durch mindestens einen Temperaturwert) in dem Bereich des jeweiligen Messrohres gebildet. Bei dieser Weiterbildung muss die Heizrate bzw. Kühlrate bei dem ersten und dem zweiten Messrohr nicht zwingend exakt gleich sein. Wie für den Fachmann ersichtlich ist, ist es für eine zuverlässige Detektion einer Verstopfung jedoch sinnvoll, dass die jeweilige Wärmemenge bei dem ersten Messrohr und bei dem zweiten Messrohr über eine vergleichbare bzw. ähnliche Zeit zugeführt wird, so dass sich zusätzliche, zeitbedingte Effekte nicht auf das Ergebnis des Vergleichs auswirken. Vorzugsweise wird die Wärmemenge parallel bzw. zeitgleich bei dem ersten und dem zweiten Messrohr zugeführt bzw. abgeführt. Durch die Erfassung der Temperatur kann ein Maß für den Wärmetransport durch das Medium in dem jeweiligen Messrohr erfasst werden. Die erste und zweite Vergleichsgröße kann dabei eine direkt nach oder alternativ um einen vorbestimmten Zeitabstand versetzt zu der Unterbrechung der Wärmezuführung oder Wärmeabführung erfasste Temperatur sein. Die erste und zweite Vergleichsgröße können aber auch jeweils durch einen zeitlichen Verlauf des Temperaturabfalls bzw. Temperaturanstiegs nach Unterbrechung der Wärmezuführung bzw. Wärmeabführung gebildet werden.

Gemäß einer nicht erfindungsgemäßen Weiterbildung wird bei dem Schritt des Zuführens bzw. Abführens von Wärme bei dem ersten Messrohr jeweils die gleiche Wärmemenge pro Zeiteinheit zu- bzw. abgeführt wie bei dem zweiten Messrohr. Die erste und die zweite Vergleichsgröße werden jeweils durch mindestens eine, während der und/oder zeitlich nach der Wärmezuführung bzw. Wärmeabführung erfasste Temperatur in dem Bereich des jeweiligen Messrohres gebildet. Indem gemäß dieser Weiterbildung bereits das Heizen bzw. Kühlen bei dem ersten Messrohr und dem zweiten Messrohr mit gleicher Heiz- bzw. Kühlrate erfolgt, kann die Temperatur zusätzlich oder alternativ zu den oberhalb erläuterten Varianten auch bereits während des Heiz- bzw. Kühlvorgangs erfasst werden und als Maß für den Wärmetransport durch das Medium in dem jeweiligen Messrohr herangezogen werden. Auch während dieses Heiz- bzw. Kühlvorgangs kann, wie oberhalb erläutert wird, in entsprechender Weise ein einzelner, an dem jeweiligen Messrohr erfasster Temperaturwert oder aber auch ein zeitlicher Verlauf des Temperaturanstiegs bzw. Temperaturabfalls in dem Bereich des jeweiligen Messrohres als Vergleichsgröße herangezogen werden. Wird die Vergleichsgröße durch eine, zeitlich nach der Wärmezuführung bzw. Wärmeabführung erfasste Temperatur gebildet, so wird auf die verschiedenen, oberhalb erläuterten Varianten verwiesen.

Gemäß einer nicht erfindungsgemäßen Weiterbildung wird bei dem Schritt des Zuführens bzw. Abführens von Wärme bei dem ersten Messrohr und bei dem zweiten Messrohr jeweils solch eine Wärmemenge pro Zeiteinheit zu- bzw. abgeführt, dass eine in dem Bereich des ersten Messrohres erfasste Temperatur einer in dem Bereich des zweiten Messrohres erfassten Temperatur entspricht. Die erste und die zweite Vergleichsgröße werden jeweils durch die dem jeweiligen Messrohr zugeführte Wärmemenge gebildet. Bei dieser Weiterbildung wird die in dem Bereich eines Messrohres zugeführte bzw. abgeführte Wärmemenge, um einen bestimmten Temperaturanstieg bzw. Temperaturabfall in dem Bereich dieses Messrohres zu erzielen, als Maß für den Wärmetransport durch das Medium in dem jeweiligen Messrohr herangezogen.

Gemäß einer Weiterbildung werden die Schritte des Zuführens bzw. Abführens von Wärme (Schritt A)), des Erfassens einer Temperatur (Schritt B)), des Bestimmens und Vergleichens (Schritt C)) sowie des Detektierens (Schritt D)) in dem Durchflussmessgerät durchgeführt. Hierzu ist in dem Durchflussmessgerät insbesondere eine entsprechend ausgebildete Elektronik vorgesehen. Grundsätzlich ist aber auch möglich, dass Teile des erfindungsgemäßen Verfahrens in einer übergeordneten Steuereinheit, die über ein Netzwerk mit dem Durchflussmessgerät in Kommunikationsverbindung steht, durchgeführt werden oder von dieser Steuereinheit aus gesteuert werden. Gemäß einer Weiterbildung werden die Schritte des Zuführens bzw. Abführens von Wärme (Schritt A)), des Erfassens einer Temperatur (Schritt B)), des Bestimmens und Vergleichens (Schritt C)) sowie des Detektierens (Schritt D)) parallel zu einer in dem Durchflussmessgerät durchgeführten Durchflussmessung durchgeführt. Dementsprechend wird eine Durchflussmessung nicht für die Durchführung des erfindungsgemäßen Detektionsverfahrens unterbrochen. Bei der parallel durchgeführten Durchflussmessung kann es sich insbesondere um eine Coriolis-Massedurchflussmessung, eine Dichtemessung und/oder eine Viskositätsmessung handeln.

Gemäß einer Weiterbildung wird in dem Fall, in dem eine Verstopfung mindestens eines Messrohres des Messwandlers detektiert wird, diese Verstopfung an einen Benutzer und/oder an eine mit dem Durchflussmessgerät in Kommunikationsverbindung stehende Steuereinheit signalisiert. Eine Signalisierung an einen Benutzer kann beispielsweise über eine Vorort-Anzeige des Durchflussmessgerätes und/oder über einen Signalton des Durchflussmessgerätes erfolgen. Die Steuereinheit steht in Anlagen der Prozessautomatisierungstechnik in der Regel über ein Netzwerk (z.B. ein Feldbus-Netzwerk) mit dem Durchflussmessgerät (und in der Regel auch mit weiteren Feldgeräten) in Kommunikationsverbindung. Die Steuereinheit kann dabei beispielsweise in Bezug auf die ihr zugeordneten Feldgeräte eine Prozesssteuerung und/oder Prozessüberwachung durchführen.

Die vorliegende Erfindung betrifft ferner ein Durchflussmessgerät, durch das mindestens eine physikalische Messgröße eines in einer Rohrleitung strömenden Mediums, insbesondere ein Massedurchfluss, eine Dichte und/oder eine Viskosität des Mediums, bestimmbar ist, wobei das Durchflussmessgerät einen Messwandler vom Vibrationstyp mit mindestens zwei strömungstechnisch parallel geschalteten Messrohren aufweist, die im Einsatz zu mechanischen Schwingungen anregbar sind. Ferner weist das Durchflussmessgerät mindestens ein erstes Heizelement, durch das Wärme an ein im Einsatz in einem ersten Messrohr geführtes Medium zuführbar ist oder mindestens ein erstes Kühlelement, durch das Wärme von einem im Einsatz in einem ersten Messrohr geführten Medium abführbar ist, mindestens einen im Bereich des ersten Messrohres angeordneten, ersten Temperatursensor, der thermisch an das im Einsatz in dem ersten Messrohr geführte Medium angekoppelt ist, und eine Elektronik des Durchflussmessgerätes, die derart ausgebildet ist, dass durch diese im Einsatz basierend auf einer Wärmezuführung über das erste Heizelement bzw. Wärmeabführung über das erste Kühlelement sowie auf einer Temperaturerfassung durch den ersten Temperatursensor eine erste Vergleichsgröße, die charakteristisch für einen Wärmetransport durch das Medium in dem ersten Messrohr ist, bestimmbar ist und die bestimmte erste Vergleichsgröße mit einer Referenzgröße vergleichbar ist, und dass durch die Elektronik eine Verstopfung mindestens eines Messrohres des Messwandlers detektierbar ist, falls die erste Vergleichsgröße um mehr als einen Grenzwert von der Referenzgröße abweicht.

Die oberhalb in Bezug auf das erfindungsgemäße Verfahren erläuterten Weiterbildungen und Varianten sind in entsprechender Weise auch in dem erfindungsgemäßen Durchflussmessgerät realisierbar. Bei den oberhalb erläuterten Verfahrensschritten ist, soweit dies technisch möglich ist, insbesondere die Elektronik des Durchflussmessgerätes zur Ausführung des entsprechenden Schrittes und/oder zur Ansteuerung einer entsprechenden Funktionseinheit (des Durchflussmessgerätes) zur Durchführung des Schrittes ausgebildet. Die Elektronik kann dabei digital und/oder analog arbeiten. In dem Zusammenhang mit dem Durchflussmessgerät werden sämtliche Funktionseinheiten, wie beispielsweise das Heizelement, das Kühlelement, der Temperatursensor, etc., die dem ersten Messrohr zugeordnet sind, jeweils als "erste" Funktionseinheit bezeichnet. In entsprechender Weise werden nachfolgend sämtliche Funktionseinheiten, die dem zweiten Messrohr zugeordnet sind, als "zweite" Funktionseinheit bezeichnet. Das Durchflussmessgerät ist insbesondere als Coriolis-Durchflussmessgerät ausgebildet.

Gemäß einer nicht erfindungsgemäßen Weiterbildung weist das Durchflussmessgerät mindestens ein zweites Heizelement, durch das Wärme an ein im Einsatz in mindestens einem zweiten Messrohr geführtes Medium zuführbar ist oder mindestens ein zweites Kühlelement, durch das Wärme von einem im Einsatz in mindestens einem zweiten Messrohr geführten Medium abführbar ist, und mindestens einen im Bereich des zweiten Messrohres angeordneten zweiten Temperatursensor, der thermisch an das im Einsatz in dem zweiten Messrohr geführte Medium angekoppelt ist, auf. Die Elektronik des Durchflussmessgerätes ist dabei derart ausgebildet, dass basierend auf einer Wärmezuführung über das zweite Heizelement bzw. Wärmeabführung über das zweite Kühlelement sowie auf einer Temperaturerfassung durch den zweiten Temperatursensor eine zweite Vergleichsgröße, die charakteristisch für einen Wärmetransport durch das Medium in dem zweiten Messrohr ist, bestimmbar ist und dass diese zweite Vergleichsgröße als Referenzgröße für den Vergleich mit der ersten Vergleichsgröße herangezogen wird.

Gemäß einer Weiterbildung ist der mindestens eine erste Temperatursensor an dem ersten Messrohr vorgesehen und der mindestens eine zweite Temperatursensor ist an dem zweiten Messrohr vorgesehen. Dabei kann, wie oberhalb erläutert wird, jeweils vorgesehen sein, dass der Temperatursensor innerhalb des jeweiligen Messrohres oder auch innen oder außen an der Messrohrwand des jeweiligen Messrohres angebracht ist. Gemäß einer Weiterbildung ist mindestens ein Heizelement auch als Temperatursensor betreibbar.

Weitere Vorteile und Zweckmäßigkeiten der Erfindung ergeben sich anhand der nachfolgenden Beschreibung von Ausführungsformen unter Bezugnahme auf die beigefügten Figuren. Von den Figuren zeigen:
- Fig. 1:: eine schematische Darstellung eines Durchflussmessgerätes in perspektivischer Ansicht mit teilweise abgenommenem Gehäuse zur Veranschaulichung einer Ausführungsform der vorliegenden Erfindung;
- Fig. 2:: eine Seitenansicht des in Fig. 1 dargestellten Durchflussmessgerätes mit teilweise abgenommenem Gehäuse; und
- Fig. 3:: eine graphische Auftragung gemessener Temperaturwerte über der Zeit zur Veranschaulichung einer Ausführungsform der Erfindung.

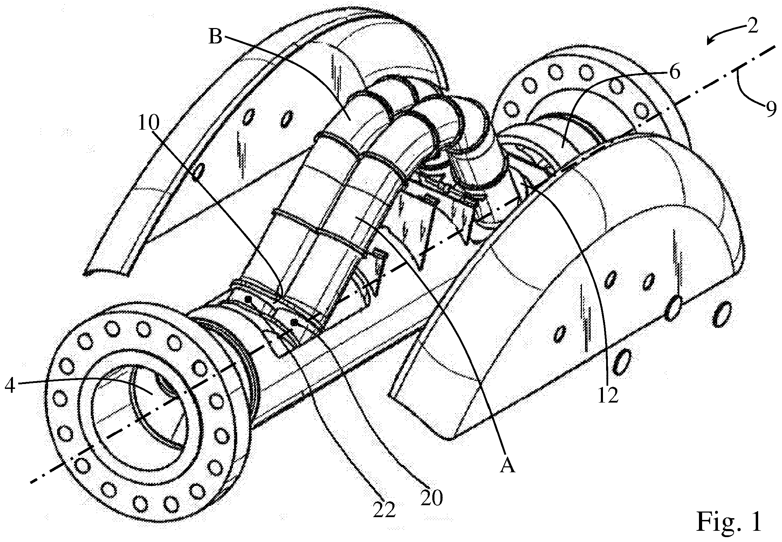

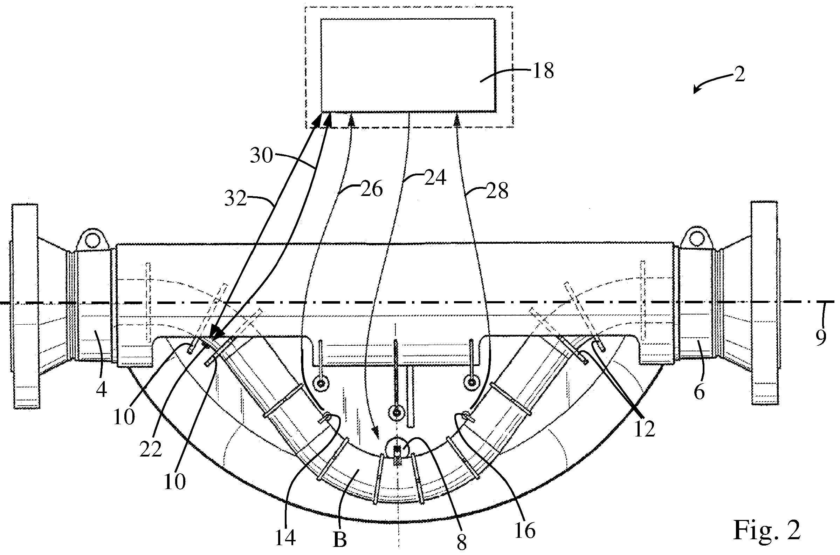

In den Figuren 1 und 2 ist beispielhaft ein Durchflussmessgerät 2 dargestellt, das zur Durchführung des erfindungsgemäßen Detektionsverfahrens ausgebildet ist. Das Durchflussmessgerät 2 weist zwei schwingungsfähig gehalterte Messrohre A und B auf, die jeweils bogenförmig ausgebildet sind und parallel zueinander verlaufen. Das Durchflussmessgerät 2 ist dabei derart in eine (nicht dargestellte) Rohrleitung einsetzbar, dass die beiden Messrohre A und B von dem in der Rohrleitung strömenden Medium durchströmt werden. Hierzu weist das Durchflussmessgerät 2 eingangsseitig einen Strömungsteiler 4 auf, durch den das Medium auf die beiden Messrohre A und B aufgeteilt wird. Ausgangsseitig ist in entsprechender Weise ein Strömungsteiler 6 vorgesehen, durch den das aus den beiden Messrohren A und B austretende Medium wieder zusammengeführt und zu einem Auslass des Coriolis-Durchflussmessgerätes 2 geleitet wird.

Zwischen den beiden Messrohren A und B erstreckt sich ein Erreger 8, der in dem vorliegenden Ausführungsbeispiel durch einen elektrodynamischen Erreger 8 gebildet wird. Der Erreger 8 ist bei dem vorliegenden Ausführungsbeispiel an einem Umkehrpunkt des Bogens, der jeweils durch die beiden Messrohre A und B gebildet wird, angeordnet. Der Erreger 8 ist derart ausgebildet, dass durch Anlegen einer elektrischen Anregungsspannung seine Länge verändert wird. Durch Anlegen einer entsprechenden, periodischen elektrischen Anregungsspannung an den Erreger 8 können die beiden Messrohre A und B periodisch auseinandergedrückt und/oder zusammengezogen werden, so dass sie Biegeschwingungen ausführen. Dabei werden die beiden Messrohre A und B gegenphasig zueinander angeregt und führen jeweils eine (zueinander gegenphasige) Schwenkbewegung um eine Längsachse 9 des Durchflussmessgerätes 2 aus. Die beiden Messrohre A und B sind ferner eingangsseitig und ausgangsseitig durch entsprechende Koppelelemente 10, 12 mechanisch aneinander gekoppelt.

Zwischen den beiden Messrohren A und B, jeweils an einem eingangsseitigen und an einem ausgangsseitigen Abschnitt derselben, erstrecken sich zwei Schwingungs-Sensoren 14, 16, über deren Längenänderung mechanische Schwingungen der beiden Messrohre A und B erfassbar sind. In dem vorliegenden Ausführungsbeispiel ist durch die beiden Schwingungs-Sensoren 14, 16 jeweils die Abstandsänderung zwischen den beiden Messrohren A, B, d.h. deren kombinierte Amplitude, erfassbar. Die Schwingungs-Sensoren 14, 16 werden beispielsweise durch elektrodynamische Schwingungs-Sensoren gebildet. Die Auswertung der von den Schwingungs-Sensoren 14, 16 bereitgestellten Sensorsignale (bzw. Messsignale) sowie die Ansteuerung des Erregers 8 erfolgt durch eine entsprechend ausgebildete Elektronik 18, die lediglich in Fig. 2 schematisch durch eine Box dargestellt ist. Die Ansteuerung des Erregers 8 durch die Elektronik ist in Fig. 2 schematisch durch den Pfeil 24 dargestellt, während die Bereitstellung der Sensorsignale durch die Schwingungs-Sensoren 14, 16 an die Elektronik in Fig. 2 schematisch durch die Pfeile 26, 28 dargestellt ist.

Das Durchflussmessgerät 2 wird vorliegend durch ein Coriolis-Durchflussmessgerät gebildet. Dementsprechend ist durch das Durchflussmessgerät 2 ein Massedurchfluss des in der jeweiligen Rohrleitung strömenden Mediums bestimmbar. Hierzu wird über die beiden Schwingungs-Sensoren 14, 16 unter anderem eine Phasenverschiebung der Schwingungen der Messrohre A, B entlang der Erstreckungsrichtung der beiden Messrohre A, B erfasst. Aus der erfassten Phasenverschiebung kann dann in der Elektronik 18 der Massedurchfluss ermittelt werden. Das Durchflussmessgerät 2 ist derart ausgebildet, dass durch dieses auch eine Dichte sowie eine Viskosität des strömenden Mediums bestimmbar sind.

Bei hochviskosen und/oder zur Ansatzbildung neigenden Medien kann der Fall auftreten, dass eines der Messrohre A, B vollständig oder teilweise verstopft. Solange durch das verbleibende Messrohr A bzw. B noch ein (dementsprechend erhöhter) Durchfluss möglich ist, ist eine Verstopfung eines Messrohres A bzw. B im Rahmen einer Coriolis-Massedurchflussmessung nicht erkennbar. Um das erfindungsgemäße Detektionsverfahren zur Detektion einer Verstopfung eines Messrohres A, B durchführen zu können, ist an jedem Messrohr A, B ein Heizelement 20, 22 vorgesehen. Die Heizelemente 20, 22 sind jeweils in einem einlassseitigen Abschnitt der Messrohre A, B an einer Messrohrwand derselben angeordnet. Bei der vorliegenden Ausführungsform sind die Heizelemente jeweils an der Außenseite der (aus metallischem und damit gut wärmeleitfähigen Material gebildeten) Messrohrwand angeordnet und sind damit über die Messrohrwand thermisch an das in dem jeweiligen Messrohr A bzw. B geführte Medium angekoppelt. Alternativ kann vorgesehen sein, dass sich die Heizelemente 20, 22 teilweise oder vollständig durch die Messrohrwand hindurch erstrecken und gegebenenfalls in direktem Kontakt mit dem in dem jeweiligen Messrohr A bzw. B geführten Medium stehen.

Die Heizelemente 20, 22 sind als Widerstandsheizelemente ausgebildet, deren Heizbetrieb von der Elektronik 18 aus gesteuert wird. Während des Heizbetriebs der beiden Heizelemente 20, 22 wird durch das erste Heizelement 20 Wärme an ein in dem ersten Messrohr A geführtes Medium zugeführt, während durch das zweite Heizelement 22 Wärme an ein in dem zweiten Messrohr B geführtes Medium zugeführt wird. Zumindest in den Zeiten, in denen kein Heizbetrieb durchgeführt wird, sind die Heizelemente 20, 22 auch als Temperatursensoren 20 bzw. 22 betreibbar. Eine entsprechende Ansteuerung erfolgt wiederum durch die Elektronik 18, durch die auch die Messsignale der Temperatursensoren 20, 22 ausgewertet werden. Während des Betriebs als Temperatursensoren 20, 22 wird durch den ersten Temperatursensor 20, der thermisch (über die Messrohrwand) an das in dem ersten Messrohr A geführte Medium angekoppelt ist, eine Temperatur erfasst und durch den zweiten Temperatursensor 22, der thermisch (über die Messrohrwand) an das in dem zweiten Messrohr B geführte Medium angekoppelt ist, eine Temperatur erfasst. Die Vorgänge der Ansteuerung der Heizelemente 20, 22 bzw. Temperatursensoren 20, 22 durch die Elektronik 18 sowie der Bereitstellung der Messsignale der Temperatursensoren 20, 22 an die Elektronik sind in Fig. 2 schematisch durch die Pfeile 30, 32 dargestellt.

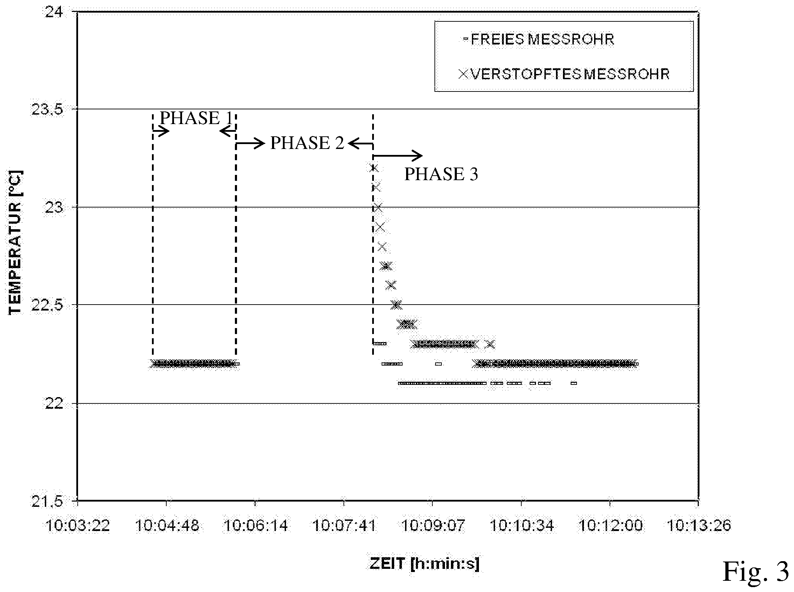

Nachfolgend wird eine erste Ausführungsform des erfindungsgemäßen Detektionsverfahrens unter zusätzlicher Bezugnahme auf Fig. 3 erläutert. In Fig. 3 sind die von den beiden Temperatursensoren 20, 22 erfassten Temperaturwerte über der Zeit dargestellt. Dabei ist auf der x-Achse die Zeit als Uhrzeit (in Stunden : Minuten : Sekunden) aufgetragen, während auf der y-Achse die Temperatur (in °C) aufgetragen ist. In einer Versuchsanordnung wurde ein Messrohr (hier: Messrohr A) mit einem Gummistopfen verstopft, während das zweite Messrohr (Messrohr B) weiterhin einen freien Durchfluss des Mediums (hier: Wasser) ermöglichte. In der graphischen Darstellung der Fig. 3 werden die von dem Temperatursensor 20 (des verstopften Messrohres) erfassten Temperaturwerte durch Kreuze dargestellt, während die von dem Temperatursensor 22 (des freien Messrohres B) erfassten Temperaturwerte durch Rechtecke dargestellt sind. Zu Beginn des Versuchs sind die von den beiden Temperatursensoren 20, 22 erfassten Temperaturwerte im Wesentlichen identisch (Phase 1 in Fig. 3).

Als nächstes werden die beiden Heizelemente 20, 22 derart durch die Elektronik angesteuert, dass diese mit der jeweils gleichen Heizleistung (bzw. Heizrate) über eine gleiche Zeitdauer heizen (Phase 2 in Fig. 3). Während dieser Betriebsphase ist bei der vorliegenden Versuchsanordnung kein Temperaturwert der beiden Temperatursensoren 20, 22 verfügbar.

Direkt nach Unterbrechung des Heizbetriebs wird durch die beiden Temperatursensoren 20, 22 die Temperaturmessung begonnen (Phase 3 in Fig. 3). Wie anhand der Fig. 3 ersichtlich ist, ist bereits direkt nach Unterbrechung des Heizbetriebs bei dem verstopften Messrohr A die Temperatur deutlich höher als bei dem freien Messrohr B. Dies ist darauf zurückzuführen, dass während der Heizphase aufgrund des Durchflusses von Medium in dem freien Messrohr B der Wärmetransport deutlich höher ist als bei dem verstopften Messrohr A. Weiterhin ist bei dem jeweiligen Kurvenverlauf der Temperaturwerte in der Phase 3 zu beobachten, dass die Temperaturwerte des zweiten Temperatursensors 22 bei dem freien Messrohr B deutlich schneller abfallen und sich dementsprechend schneller auf den ursprünglichen Temperaturwert einpendeln als die bei dem verstopften Messrohr A durch den ersten Temperatursensor 20 erfassten Temperaturwerte.

Gemäß einer nicht erfindungsgemäßen Ausführungsform der Erfindung wird ein von dem ersten Temperatursensor 20 des ersten Messrohres A direkt nach Unterbrechung des Heizbetriebs erfasster Temperaturwert als erste Vergleichsgröße verwendet. In entsprechender Weise wird ein von dem zweiten Temperatursensor 22 direkt nach Unterbrechung des Heizbetriebs erfasster Temperaturwert als zweite Vergleichsgröße (Referenzgröße für den Vergleich mit der ersten Vergleichsgröße) verwendet. Wie anhand der Erläuterung oberhalb hervorgeht, ist die erste Vergleichsgröße charakteristisch für einen Wärmetransport durch das Medium in dem ersten Messrohr A, während die zweite Vergleichsgröße charakteristisch für einen Wärmetransport durch das Medium in dem zweiten Messrohr B ist. Durch die Elektronik 18 wird die erste Vergleichsgröße mit der zweiten Vergleichsgröße verglichen. Im vorliegenden Fall ergibt der Vergleich, dass die erste Vergleichsgröße um mehr als einen, in der Elektronik 18 gespeicherten Grenzwert von der zweiten Vergleichsgröße (bzw. Referenzgröße) abweicht, so dass durch die Elektronik 18 eine Verstopfung eines Messrohres festgestellt wird. Durch die Elektronik 18 wird ferner anhand der Richtung der Abweichung der ersten Vergleichsgröße von der zweiten Vergleichsgröße festgestellt, dass in dem zweiten Messrohr B ein erhöhter Wärmetransport durch das Medium erfolgt, während in dem ersten Messrohr A ein reduzierter Wärmetransport durch das Medium erfolgt. Dementsprechend wird durch die Elektronik 18 eine Verstopfung des ersten Messrohres A detektiert. Dies wird einem Benutzer über eine, an dem Durchflussmessgerät 2 vorgesehene (in den Figuren nicht dargestellte) Vorort-Anzeige signalisiert. Ferner wird eine, mit dem Durchflussmessgerät 2 in Kommunikationsverbindung stehende (nicht dargestellte) Steuereinheit von der Verstopfung des Messrohres A informiert. In Zeiten, in denen das erfindungsgemäße Detektionsverfahren nicht durchgeführt wird, kann mindestens einer der Temperatursensoren 20, 22 zur Temperaturerfassung für eine Temperaturkompensation bei der parallel stattfindenden Durchflussmessung (beispielsweise zur Bestimmung des Massedurchflusses, der Dichte und/oder der Viskosität des Mediums) eingesetzt werden.

Nachfolgend werden Ausführungsformen der Erfindung erläutert, wobei vorwiegend auf die Unterschiede gegenüber der oben genannten, nicht erfindungsgemäßen Ausführungsform eingegangen wird. Gemäß einer Ausführungsform werden als erste Vergleichsgröße ein zeitlicher Verlauf des Temperaturabfalls der von dem ersten Temperatursensor 20 an dem ersten Messrohr A erfassten Temperaturwerte und als zweite Vergleichsgröße ein zeitlicher Verlauf des Temperaturabfalls der von dem zweiten Temperatursensor 22 an dem zweiten Messrohr B erfassten Temperaturwerte verwendet. Dabei kann insbesondere ein vorbestimmter Zeitabschnitt der in Fig. 3 dargestellten Phase 3 (d.h. nach Unterbrechung des Heizbetriebs) für den Vergleich herangezogen werden.

Gemäß einer Ausführungsform werden bereits während des Heizbetriebs (vgl. Phase 2 in Fig. 3) die Temperatur in dem Bereich des ersten Messrohres A sowie die Temperatur in dem Bereich des zweiten Messrohres B erfasst. Gegebenenfalls müssen hierzu zusätzlich zu den Heizelementen 20, 22 entsprechende (in den Figuren nicht dargestellte) Temperatursensoren vorgesehen werden, die thermisch entsprechend an das in dem jeweiligen Messrohr A bzw. B geführte Medium angekoppelt sind. Als erste Vergleichsgröße kann in diesem Fall ein zeitlicher Verlauf des Temperaturanstiegs oder auch ein einzelner, nach einer vorbestimmten Zeit (ab Starten des Heizbetriebs) erfasster Temperaturwert, der durch einen ersten Temperatursensor an dem ersten Messrohr A erfasst wird, verwendet werden. In entsprechender Weise kann ein zeitlicher Verlauf des Temperaturanstiegs oder auch ein einzelner, nach einer vorbestimmten Zeit (ab Starten des Heizbetriebs) erfasster Temperaturwert, der durch einen zweiten Temperatursensor an dem zweiten Messrohr B erfasst wird, verwendet werden.

Gemäß einer Ausführungsform wird ähnlich wie bei der dritten Ausführungsform parallel zu dem Heizbetrieb durch die Heizelemente 20, 22 auch die Temperatur in dem Bereich der jeweiligen Messrohre A, B durch entsprechende Temperatursensoren erfasst. Die Elektronik 18 steuert dabei die beiden Heizelemente 20, 22 in Abhängigkeit von den erfassten Temperaturen im Bereich der jeweiligen Messrohre A, B derart an, dass eine in dem Bereich des ersten Messrohres A erfasste Temperatur einer in dem Bereich des zweiten Messrohres erfassten Temperatur entspricht. Insbesondere wird ein vorbestimmtes Temperaturprofil durchlaufen. Dabei wird als erste Vergleichsgröße eine, während eines vorbestimmten Zeitabschnitts (beispielsweise beginnend mit dem Start des Heizbetriebs und endend nach einer vorbestimmten Zeitdauer oder bei Erreichen eines vorbestimmten Temperaturwertes) durch das erste Heizelement 20 zugeführte Wärmemenge verwendet. Als zweite Vergleichsgröße wird eine, während diesem vorbestimmten Zeitabschnitt durch das zweite Heizelement 22 zugeführte Wärmemenge verwendet.

Bei sämtlichen, oberhalb erläuterten Ausführungsformen ist eine spiegelsymmetrische Ausbildung der Messrohre A, B und eine entsprechende, spiegelsymmetrische Ausbildung der Heizelemente 20, 22 sowie der Temperatursensoren vorgesehen. Die Symmetrieebene verläuft dabei zwischen den beiden Messrohren. Dies ist insbesondere deshalb bevorzugt, da aufgrund dieser Symmetrie die in Bezug auf die jeweiligen Messrohre erfassten Messwerte (Temperaturwerte, Wärmemengen, etc.) direkt vergleichbar sind.

Die vorliegende Erfindung ist nicht auf die unter Bezugnahme auf die Figuren erläuterten Ausführungsformen beschränkt. Insbesondere sind bei der in den Figuren dargestellten Bauweise die Heizelemente 20, 22 bzw. Temperatursensoren 20, 22 jeweils an einem einlassseitigen Abschnittt der Messrohre A, B angeordnet. Alternativ können sie auch an einem zentralen Abschnitt oder an einem auslassseitigen Abschnitt der Messrohre A, B vorgesehen sein. Ferner können die oberhalb erläuterten Ausführungsformen in entsprechender Weise nur an einem Messrohr (z.B. dem ersten Messrohr A) durchgeführt werden.

## Patentansprüche

1. Verfahren zum Detektieren vollständigen oder teilweisen Verstopfung eines Messrohres (A; B) eines Messwandlers vom Vibrationstyp eines Durchflussmessgerätes (2), wobei der Messwandler von Medium durchströmt wird und mindestens zwei strömungstechnisch parallel geschaltete Messrohre (A, B) aufweist, die im Einsatz zu mechanischen Schwingungen anregbar sind, **gekennzeichnet durch** nachfolgende Schritte:
A) Zuführen von Wärme an in einem ersten Messrohr (A) geführtes Medium mittels mindestens einem Heizelement (20) oder
Abführen von Wärme von in einem ersten Messrohr geführten Medium mittels mindestens einem Kühlelement,
B) Erfassen einer Temperatur mittels mindestens eines Temperatursensors (20), der thermisch an das in dem ersten Messrohr (A) geführte Medium angekoppelt ist;
C) Bestimmen einer ersten Vergleichsgröße, die charakteristisch für einen Wärmetransport durch das Medium in dem ersten Messrohr (A) ist, basierend auf der Wärmezuführung beziehungsweise Wärmeabführung sowie der Temperaturerfassung und Vergleichen derselben mit einer Referenzgröße;
D) Detektieren einer Verstopfung mindestens eines Messrohres (A; B) des Messwandlers, falls die erste Vergleichsgröße um mehr als einen Grenzwert von der Referenzgröße abweicht,
**dadurch gekennzeichnet, dass** die erste Vergleichsgröße eine basierend auf der Wärmezuführung beziehungsweise Wärmeabführung sowie der Temperaturerfassung bestimmte Durchflussrate durch das erste Messrohr (A) ist und dass die Referenzgröße eine für das erste Messrohr (A) erwartungsgemäße Durchflussrate ist, die basierend auf einer nach dem Coriolis-Prinzip erfassten Massedurchflussrate durch das gesamte Durchflussmessgerät (2) bestimmt wird.

2. Verfahren gemäß Anspruch 1, **gekennzeichnet durch** nachfolgende(n) Schritt(e):
E) Detektieren einer Verstopfung des ersten Messrohres (A), wenn die bestimmte, erste Vergleichsgröße von der Referenzgröße derart abweicht, dass in dem ersten Messrohr (A) ein reduzierter Wärmetransport durch das Medium erfolgt; und/oder
F) Detektieren einer Verstopfung mindestens eines anderen Messrohres (B) des Durchflussmessgerätes (2), wenn die bestimmte, erste Vergleichsgröße von der Referenzgröße derart abweicht, dass in dem ersten Messrohr (A) ein erhöhter Wärmetransport durch das Medium erfolgt.

3. Verfahren gemäß einem der vorangehenden Ansprüche, **dadurch gekennzeichnet, dass** die Schritte des Zuführens bzw. Abführens von Wärme, des Erfassens einer Temperatur, des Bestimmens und Vergleichens sowie des Detektierens in dem Durchflussmessgerät (2) durchgeführt werden.

4. Verfahren gemäß einem der vorangehenden Ansprüche, **dadurch gekennzeichnet, dass** die Schritte des Zuführens bzw. Abführens von Wärme, des Erfassens einer Temperatur, des Bestimmens und Vergleichens sowie des Detektierens parallel zu einer in dem Durchflussmessgerät (2) durchgeführten Durchflussmessung durchgeführt werden.

5. Verfahren gemäß einem der vorangehenden Ansprüche, **dadurch gekennzeichnet, dass** in dem Fall, in dem eine Verstopfung mindestens eines Messrohres (A; B) des Messwandlers detektiert wird, diese Verstopfung an einen Benutzer und/oder an eine mit dem Durchflussmessgerät (2) in Kommunikationsverbindung stehende Steuereinheit signalisiert wird.

## Claims

1. Procedure for detecting a complete or partial blockage of a measuring tube (A, B) of a vibronic-type transducer of a flowmeter (2), wherein medium flows through the transducer and wherein the transducer has at least two measuring tubes (A, B) which are switched in parallel in terms of flow and can be excited, during operation, to produce mechanical vibrations, wherein said procedure is **characterized by** the following steps:
A) Supply of heat to a medium conducted in a first measuring tube (A) by means of at least one heating element (20) or
Evacuation of heat from a medium conducted in a first measuring tube by means of at least one cooling element;
B) Measurement of a temperature by means of at least one temperature sensor (20), which is thermally coupled to the medium conducted in the first measuring tube (A);
C) Determination of a first comparative variable, which is characteristic for the transport of heat through the medium in the first measuring tube (A), on the basis of the supply of heat or evacuation of heat and the temperature measurement, and comparison of same with a reference variable;
D) Detection of a blockage of at least one measuring tube (A, B) of the transducer if the first comparative variable deviates from the reference variable by more than a limit value,
**characterized in that** the first comparative variable is a flow rate through the first measuring tube (A) that is determined on the basis of the supply of heat or the evacuation of heat, as well as the temperature measurement, and **in that** the reference variable is a flow rate expected for the first measuring tube (A) that is determined on the basis of a mass flow rate through the flowmeter (2) which is measured according to the Coriolis principle.

2. Procedure as claimed in Claim 1, **characterized by** the following steps:
E) Detection of a blockage of the first measuring tube (A) if the first comparison variable determined deviates from the reference variable in such a way that reduced heat transportation through the medium takes place in the first measuring tube (A); and/or
F) Detection of a blockage of the at least one other measuring tube (B) of the flowmeter (2) if the first comparative variable determined deviates from the reference variable in such a way that an increased heat transportation through the medium takes place in the first measuring tube (A).

3. Procedure as claimed in one of the previous claims, **characterized in that** the steps involving the supply or evacuation of heat, the measurement of a temperature, the determination, the comparison and the detection are performed in the flowmeter (2).

4. Procedure as claimed in one of the previous claims, **characterized in that** the steps involving the supply or evacuation of heat, the measurement of a temperature, the determination, the comparison and the detection are performed in parallel to a flow measurement performed in the flowmeter (2).

5. Procedure as claimed in one of the previous claims, **characterized in that** in the event that a blockage of at least a measuring tube (A, B) of the transducer is detected, said blockage is signaled to a user and/or a control unit communicating with the flowmeter (2).

## Revendications

1. Procédé destiné à la détection d'un colmatage total ou partiel d'un tube de mesure (A, B) d'un transducteur du type à vibration d'un débitmètre (2), le transducteur étant parcouru par le produit et présentant au moins deux tubes de mesure (A, B) couplés en parallèle en termes d'écoulement, lesquels tubes peuvent, pendant le fonctionnement, être excités en vibrations mécaniques, lequel procédé est **caractérisé par** les étapes suivantes :
A) Apport de chaleur au produit guidé dans un premier tube de mesure (A) au moyen d'au moins un élément chauffant (20) ou
Évacuation de la chaleur du produit guidé dans un premier tube de mesure au moyen d'au moins un élément de refroidissement ;
B) Mesure d'une température au moyen d'au moins un capteur de température (20), lequel est couplé thermiquement au produit guidé dans le premier tube de mesure (A) ;
C) Détermination d'une première grandeur de comparaison, qui est caractéristique du transport de chaleur à travers le produit dans le premier tube de mesure (A), sur la base de l'apport de chaleur et de l'évacuation de chaleur, ainsi que de la mesure de la température, et comparaison de celle-ci à une grandeur de référence ;
D) Détection d'un colmatage d'au moins un tube de mesure (A, B) du transducteur dans le cas où la première grandeur de comparaison s'écarte de la grandeur de référence de plus d'une valeur limite,
**caractérisé en ce que** la première grandeur de comparaison est un débit à travers le premier tube de mesure (A) déterminé sur la base de l'apport de chaleur ou de l'évacuation de chaleur, ainsi que de la mesure de température, et **en ce que** la grandeur de référence est un débit attendu pour le premier tube de mesure (A), lequel débit est déterminé sur la base d'un débit massique à travers l'ensemble du débitmètre (2), mesuré selon le principe de Coriolis.

2. Procédé selon la revendication 1, **caractérisé par** la ou les étapes suivantes :
E) Détection d'un colmatage du premier tube de mesure (A) si la première grandeur de comparaison déterminée s'écarte de la grandeur de référence de telle sorte qu'il se produit dans le premier tube de mesure (A) une réduction du transport de chaleur à travers le produit ; et/ou
F) Détection d'un colmatage d'au moins un autre tube de mesure (B) du débitmètre (2) si la première grandeur de comparaison déterminée s'écarte de la grandeur de référence de telle sorte qu'un transport de chaleur accru à travers le produit a lieu dans le premier tube de mesure (A).

3. Procédé selon l'une des revendications précédentes, **caractérisé en ce que** les étapes d'apport ou de retrait de chaleur, de mesure d'une température, de détermination et de comparaison, ainsi que de détection, sont réalisées dans le débitmètre (2).

4. Procédé selon l'une des revendications précédentes, **caractérisé en ce que** les étapes d'apport ou de retrait de chaleur, de mesure d'une température, de détermination et de comparaison, ainsi que de détection, sont réalisées en parallèle d'une mesure de débit réalisée dans le débitmètre (2).

5. Procédé selon l'une des revendications précédentes, **caractérisé en ce que** dans le cas où un colmatage d'au moins un tube de mesure (A, B) du transducteur est détecté, ce colmatage est signalé à un utilisateur et/ou à une unité de commande en communication avec le débitmètre (2).
